# EUROPÄISCHE PATENTSCHRIFT

(11) **EP 3 280 975 B1**
(45) Veröffentlichungstag und Bekanntmachung des Hinweises auf die Patenterteilung: **25.12.2019**
(21) Anmeldenummer: 16715841.9
(22) Anmeldetag: 08.04.2016
(51) Int. Cl.: G01B 21/04, G01B 5/012

(54) **TASTSTIFTHALTER**
STYLUS HOLDER
PORTE-PALPEUR

(30) Priorität: 09.04.2015 DE 102015206308
(43) Veröffentlichungstag der Anmeldung: 14.02.2018
(73) Patentinhaber: Carl Zeiss 3D Automation GmbH, 73431 Aalen (DE)
(72) Erfinder: RICHTER, Frank, 89522 Heidenheim (DE)
(74) Vertreter: Vossius & Partner Patentanwälte Rechtsanwälte mbB
(86) Internationale Anmeldenummer: PCT/EP2016/057688
(87) Internationale Veröffentlichungsnummer: WO 2016/162455

(56) Entgegenhaltungen:
- DE-B3-102006 035 540
- DE-U1- 9 010 591
- US-A1- 2010 206 068

## Beschreibung

Die vorliegende Erfindung betrifft das oberbegrifflich Beanspruchte und bezieht sich somit auf einen Taststifthalter, eine Taststifthalteranordnung und ein Verfahren zur Herstellung eines Taststiftes für Koordinatenmessmaschinen.

Taststifte sind bekannt. Sie werden an Koordinatenmessmaschinen eingesetzt, um mit diesen die Geometrie von Gegenständen hochgenau zu erfassen. Dafür besitzt die Koordinatenmessmaschine einen Arm, an welchem der Taststift befestigt wird, und zwar über einen typisch mit Gewinde versehenen Adapter, von dem sich der Schaft und ein typisch kugelförmiges Tastende erstreckt. Der Messmaschinenarm wird dann mit dem Taststift zum Werkstück bewegt, um bei Kontakt zum Werkstück ein kontaktindikatives Signal zu erzeugen. Die geometrischen Abmessungen des Werkstückes können dabei bestimmt werden, indem zugleich erfasst wird, wo sich der Messmaschinenarm bei Erzeugung des kontaktindikativen Signals befindet.

Je nach Messaufgabe sind unterschiedliche Messverfahren gebräuchlich, beispielsweise das punktweise Antasten des Werkstückes oder das scannennde Abtasten, bei dem der Taststift über das Werkstück hinweg bewegt wird, während er sich mit diesem in Kontakt befindet. Zur Erzielung hoher Genauigkeiten wird typisch zunächst eine Kalibrierung durchgeführt, indem ein bekannter Körper mit dem Taststift am Arm abgetastet wird bzw. damit bekannte Positionen angefahren werden. Danach kann mit derselben Anordnung das Werkstück abgetastet werden. Genaue Messungen erfordern bei diesem Vorgehen, dass zwischen der Kalibrierung und der eigentlichen Messung des Werkstückes keine Veränderungen am Arm oder dem Tastmittel auftreten.

Diese können aber beispielsweise auftreten, wenn sich das Tastmittel durch die Antastung des Werkstückes allmählich verändert, etwa weil es in kontinuierlicher Berührung ("scannend") über das Werkstück bewegt wird und damit am vorderen Ende Abrieb unterliegt oder sich abgeriebenes Material vom Werkstück an der Spitze sammelt; beides verändert einleuchtenderweise die Geometrie des Tastendes und verfälscht so Messungen. Um diesen Effekt zu verlangsamen, werden die Taststifte zwar an ihrem die Werkstücke berührenden Vorderende mit unterschiedlichen Tastspitzen versehen, die für das jeweils zu vermessende Werkstück besonders geeignet sind und oft aus Rubin, Diamant oder anderen, besonders harten Materialien bestehen, in der Praxis ist aber trotzdem ein regelmäßiger Taststiftaustausch und - ersatz erforderlich.

Die Messgenauigkeit ist jedoch nicht nur verringert, wenn der Taststift einem allmählichen Verschleiß unterliegt; Veränderungen können zudem auch schon durch Temperaturschwankungen hervorgerufen sein, etwa, weil sich die Materialien des Tastmittels durch Erwärmung ausdehnen. Um derartige Effekte zu vermeiden, werden im Bedarfsfall bereits Taststifte verwendet, die eine sehr niedrige Wärmedehnung besitzen. Zudem werden Taststifte mit unterschiedlich langen Abständen zwischen der Tastspitze und dem Arm der Koordinatenmessmaschine verwendet, wobei der den Abstand bestimmende Schaft je nach Messaufgabe zudem senkrecht auf den Adapter oder in anderem Winkel montiert sein kann. Aus der DE 90 10 591 U1 ist ein Magazin für die Tasterwechseleinrichtung an einem Koordinatenmessgerät bekannt, das verschiebbare Einzelabdeckungen für die verschiedenen Magazinplätze besitzt. Teile der Magazinplätze bestehen aus Kunststoff-Spritzguss. Aus der US 2010 / 0206 068 A1 ist eine weitere Anordnung bekannt, um Taststifte an einer Koordinatenmessmaschine ablegen und wieder aufnehmen zu können.

Damit ist aber ein regelmäßiger Austausch von Taststiften erforderlich, weil Verschleiß auftritt und weil die Vielzahl von unterschiedlich geformten Werkstücken und unterschiedlichen Messaufgaben unterschiedliche Ausbildungen der Taststifte etwa bezüglich der Länge des Schaftes, des Durchmessers oder der Form der Tastspitze, der für den Taststift verwendeten Materialien und so weiter erforderlich machen kann.

Die Taststifte stellen daher ein regelmäßigem Wechsel und erforderlichenfalls Neubeschaffung unterworfenes Werkzeugteil dar, das aber gleichwohl präzise zu fertigen ist.

Die Taststifte müssen daher kostengünstig hergestellt werden. Dabei werden für die Verbindung von Tastmittelteilen unterschiedliche Techniken eingesetzt. So werden der Gewindeadapter und der Schaft oftmals geklebt, gelötet oder geschrumpft; die Tastspitze und der Schaft werden dagegen in der Regel geklebt oder gelötet. Diese Stelle ist für mechanische Beschädigungen besonders anfällig. Ein Verfahren, das bei der Herstellung eines Taststiftes verwendbar ist, nämlich zur Spritzgussfixierung eines Schaftes an einem Ankopplungskörper zur Ankopplung an eine Koordinatenmessmaschine ist aus der DE 10 2006 035 540 B3 bekannt.

Dessen ungeachtet ist es erforderlich, die Taststifte ohne Gefahr einer Beschädigung zum Benutzer transportieren zu können.

Zum Transport der Taststifte sind einerseits verschraubbare Röhrchen bekannt, in welche die fertigen Taststifte eingesetzt werden können. Um durch Bewegung des Taststiftes im Transportbehälter Beschädigungen zu vermeiden, kann eine Polsterung in das Röhrchen eingebracht werden. Dabei kann jedoch nicht ausgeschlossen werden, dass etwa das Taststiftende an der Polsterung hängenbleibt, eine Beschädigung auftritt usw.

Es gibt daher auch schon Transportverpackungen, bei welchen ein Hohlraum vorgesehen ist, zu dessen Mitte hin weiche Rippen ragen, um einen aufgenommenen Taststift am Schaft zu fixieren, wenn die Rippen am Schaft anliegen. Die Hohlraumstruktur mit den Rippen kann vom Schaft weggeklappt werden, so dass dieser freiliegt und der Taststift ergriffen werden kann. Über diese so flexibel fixierten Taststifte kann eine Haube gestülpt werden, was die Taststifte für den Transport schützt. Eine entsprechende Transportverpackung für Taststifte mit Schaftdurchmessern zwischen 3 und 6 mm ist beispielsweise von Rose-Plastik AG, Hergensweiler/Lindau unter der Bezeichnung MicroBox erhältlich.

Bei derartigen Anordnungen können Verwechslungen etwa schon dadurch auftreten, dass nach der Produktion fertige Taststifte versehentlich falsch verpackt werden. Diese Gefahr wächst, je mehr zum Teil optisch nur geringe Unterschiede aufweisende Taststift-Varianten produziert werden.

Es wäre wünschenswert, zumindest einige der aufgezeigten Bedürfnisse zumindest partiell befriedigen zu können.

Die Aufgabe der vorliegenden Erfindung besteht darin, auf dem eingangs genannten Gebiet Neues für die gewerbliche Anwendung bereitzustellen.

Zur Lösung der Aufgabe werden ein Taststifthalter gemäß Anspruch 1, eine Taststifthalteranordnung, gemäß Anspruch 8 und ein Verfahren zur Herstellung eines Taststiftes gemäß Anspruch 9 beansprucht. Bevorzugte Ausführungen des Taststifthalters finden sich in den abhängigen Ansprüchen 2-7.

Ein erster Grundgedanke der Erfindung schlägt somit einen Taststifthalter für einen Taststift, der einen Messmaschinenadapter, einen Schaft und ein Tastende besitzt, mit einem Körper, der zur Aufnahme des Taststiftes ausgebildet ist und ein bewegliches Sicherungsmittel daran aufweist vor. Dabei wird vorgesehen, dass der Körper eine Grundplatte aufweist, welche zur Aufnahme des Messmaschinenadapters in einer Grundplattenebene ausgebildet ist, und das Sicherungsmittel Anlageflächen und Wechselwirkungsbereiche aufweist, wobei die Anlageflächen relativ zur Grundplattenebene in eine Sicherungsposition beweglich sind, in welcher sie in Anlage auf den Messmaschinenadapter eines im Taststifthalter angeordneten Taststiftes gelangen, und an Armen vorgesehen sind, die sich von der Grundplattenebene weg allgemein parallel zur Schaftachse eines im Körper anzuordnenden Taststiftes erstrecken, und die Wechselwirkungsbereiche so ausgebildet sind, dass das Sicherungsmittel sich durch Eingriff auf die Wechselwirkungsbereiche aus der Sicherungsposition, in der die Anlageflächen am Messmaschinenadapter anliegen, löst, und/oder dass vermittels einer Haube bzw. eines Trägers die Anlage des Sicherungsmittels in der Sicherungsposition gewährleistbar ist. Die genauen Merkmale des beanspruchten Taststifthalters sind im Anspruch 1 definiert.

Diesem Halter liegt die Erkenntnis zugrunde, dass es möglich und vorteilhaft ist, einen Halter für einen Taststift so auszugestalten, dass er nicht erst für die Verpackung eines fertigproduzierten Taststiftes einsetzbar ist, sondern von Vornherein, insbesondere bereits zu Beginn der Montage eingesetzt werden kann. Wichtig ist dazu, dass die Sicherung zuverlässig am Adapterkörper angreift, der bei Taststiften besonders massiv und stabil ausgestaltet ist, sodass auf diesen hohe Kräfte ohne Gefahr einer Taststiftbeschädigung einwirken dürfen. Dabei müssen aber von den Anlagenflächen nur vergleichsweise geringe Kräfte dann aufgenommen werden, wenn der schwere und massive Maschinenadapter bereits in einer Aufnahme aufgenommen worden ist; dies reduziert die erforderlichen Kräfte, die vom Sicherungsmittel auszuüben sind, ganz massiv, was es wiederum ermöglicht, auf einfache Weise ein Lösen der Anlagenflächen aus der Sicherungsposition oder, umgekehrt, deren sichere Anlage am Messmaschinenadapter zu erreichen. Es wird also durch das Vorsehen einer Grundplatte mit Aufnahme für den Messmaschinenadapter und einem Sicherungsmittel mit Anlageflächen, die relativ dazu beweglich sind, ermöglicht, dass nur sehr geringe Kräfte trotz sicherer Fixierung ausgeübt werden müssen. Auf diese Weise wird ohne großen Aufwand eine sichere Fixierung erlaubt, um den Messmaschinenadapter noch vor Montage anderer Elemente daran während der Taststiftherstellung im Taststifthalter anzuordnen. Die Aufnahme wird typisch Teile bzw. Teilbereiche umfassen bzw. von mehreren Seiten dicht an den Messmaschinenadapter herankommen bzw. diesen berühren, so dass seine Bewegung innerhalb der Aufnahme beschränkt ist. Es ist möglich, bei der Fixierung des Messmaschinenadapters in der Aufnahme der Grundplatte durch die am Messmaschinenadapter anliegenden Anlageflächen des Sicherungsmittels dafür Sorge zu tragen, dass die Anlageflächen den Taststiftschaft nicht berühren bzw. nicht über jene Öffnung überstehen, in welcher ein Schaft angeordnet werden soll. Damit ist der Schaft des Taststiftes bzw. die Öffnung dafür per se frei zugänglich und es kann ohne Weiteres montiert, geklebt, visuell kontrolliert werden usw. Es sei erwähnt, dass typisch zumindest für den Transport die Sicherungsmittel ausschließlich am Messmaschinenadapter angreifen, ohne in Kontakt mit dem Schaft zu treten. Dies ist allerdings nicht zwingend; vielmehr wäre es auch möglich, zusätzlich eine Positionierhilfe für die Schaftpositionierung im Messmaschinenadapter vorzusehen. Dies gilt insbesondere dort, wo besonders lange Schäfte montiert werden müssen; in einem solchen Fall ist es im Übrigen ohne Weiteres möglich, eine abnehmbare Schaft- Montagehilfe am Taststifthalter oder dessen Träger(n) vorzusehen, sei es durch auf die Grundplatte aufsteckbare Ansätze, daran angeformte, nach Schaftmontage entfernbare Elemente oder dergleichen.

In einer bevorzugten Ausführungsform der Erfindung wird die Grundplatte und das Sicherungsmittel aus Kunststoff gebildet. Beide können bevorzugt einstückig miteinander aus Kunststoff gebildet sein, auch wenn dies nicht zwingend ist. Bei einstückiger Bildung von Grundplatte und Sicherungsmittel aus Kunststoff werden typisch zwischen den Anlagenflächen und der Grundplatte verjüngte oder auf andere Art und Weise abgeschwächte Strukturen vorgesehen sein, um die Bewegung des Sicherungsmittels zu begünstigen. Die Bewegung der Anlagenflächen kann dann durch Verformen dieser schwächeren Bereiche geschehen. Dass ggf. ein Grundplattenbereich als solcher leicht gebogen werden könnte, um den Messmaschinenadapter zu fixieren oder zu lösen, sei jedoch erwähnt. Alternativ zu einer einstückigen Ausbildung können mehrere Teile aneinander montiert sein. Dass gerade bei Ausbildung des Halters aus mehreren Stücken eine Anlagefläche mit einem Schiebeelement vorgesehen sein kann, welches gegen den zu haltenden Messmaschinenadapter bewegt wird, sei erwähnt. Es ist möglich, bei Taststifthaltern mit einstückiger Ausbildung von Grundplatte und Sicherungsmittel Federelemente wie Blattfedern vorzusehen bzw. dort, wo mehrere Elemente aneinander montiert werden, eine Spiralfeder ähnlich jener, wie sie bei Wäscheklammern üblich sind, vorzusehen. Die Verwendung von Kunststoffteilen, insbesondere einstückig gespritzten Kunststoffteilen, erlaubt eine preiswerte Herstellung und begünstigt somit die Einwegverwendung. Demgemäß stellt die Verwendung des Taststifthalters als Verpackung für den Versand selbst dann keinen relevanten Kostenfaktor im Vergleich zu herkömmlichen Verpackungen dar, wenn der Taststifthalter insgesamt so massiv und stabil aufgebaut ist, dass er ohne Weiteres in und während der Produktion des Taststiftes einsetzbar ist.

Wie bereits dargelegt, ist es vorteilhaft, wenn die Anlagenflächen aufgrund der Materialflexibilität relativ zur Grundplattenebene, ggf. unter geringfügiger Deformation des Taststifthalters, beweglich sind, was eine zumindest minimale Flexibilität des Kunststoffes erfordert; wünschenswert und vorteilhaft ist zudem, wenn der Taststifthalter mit einem Körper aus Kunststoff gebildet ist, dass dieser Kunststoff wenigstens eine Temperatur von über 100°C, bevorzugt um mindestens 120°C auszuhalten vermag. Überdies ist es bevorzugt, wenn der Kunststoff bei Kälte nicht versprödet. Die hinreichend hohe Temperaturbeständigkeit erlaubt es, den Taststifthalter in der Produktion auch dort einzusetzen, wo mehrere, einen fertigen Taststift bildende Komponenten unter Verwendung von in Wärme aushärtendem Kunststoff miteinander verklebt werden sollen. Typisch kann dies für die Verbindung zwischen Schaft und Messmaschinenadapter der Fall sein. Hier ist es möglich, den Schaft in den Adapter einzukleben, und zwar mit bei erhöhten Temperaturen aushärtendem Kleber, während sich der Messmaschinenadapter im Halter befindet. In gleicher Weise ist es möglich, den Kunststoff so zu wählen, dass er in Kälte nicht versprödet. Dies hilft dort, wo es gewünscht ist, den Messmaschinenadapter vor der Montage des Schaftes einer Reinigung mit CO₂-Schnee zu unterwerfen. Es sei darauf hingewiesen, dass es ohne Weiteres möglich ist, Kunststoffe zu finden, die sowohl hinreichend temperaturbeständig zu hohen Temperaturen hin als auch noch bei Kälte hinreichend flexibel bzw. nicht versprödend sind. Als ein möglicher Kunststoff für den Halter und den Träger sei z.B. Ultrason, ein von BASF hergestelltes Polysulfon genannt.

Erfindungsgemäß werden die Anlagenflächen an Armen vorgesehen sein, die sich von der Grundplattenebene wegerstrecken, also allgemein parallel zur Schaftachse des eingesetzten, fertigen Taststiftes liegen werden. Was die Anordnung allgemein parallel zu einer Schaftachse angeht, so sei aber darauf hingewiesen, dass nicht bei allen Taststiften die Schaftachse exakt senkrecht auf einen Messmaschinenadapter bzw. eine daran gebildete Fläche steht; Messmaschinenadapter werden oftmals mit einem allgemein zylindrischen Körper gebildet, welcher zum Schaft des Taststiftes auf dem bei Benützung von der Koordinatenmessmaschine abgewandten Ende des Taststiftes kegelartig zuläuft. In einem solchen Fall können die Arme allgemein parallel zur Zylinderfläche liegen und die Anlagenflächen können auf der kegelartig zulaufenden Fläche des Messmaschinenadapters in Anlage gebracht werden.

Die beschriebene geometrische Gestalt des Messmaschinenadapters ist jedoch nicht zwingend. Vielmehr sind auch Formen denkbar, die selbst kegelstumpfartig zulaufen. In einem solchen Fall werden typisch auch die Arme nicht zwingend parallel zur Schaftachse angeordnet sein, sondern sich entsprechend dem Öffnungswinkels des Kegelstumpfes gleichfalls zur Schaftachse neigen. Zudem muss auch dort, wo etwa eine allgemein zylindrische Formgebung für den Messmaschinenadapter mit kegelstumpfartigem Zulauf zum Schaft hin, d.h. kegelstumpfartig verjüngt vorgesehen ist, keine strikte Parallelität der Arme zur Schaftachse vorliegen.

Es kann vorteilhaft sein, wenn in einem solchen Fall die Arme zum Beispiel leicht gegen die Schaftachse, nämlich auf die Schaftachse hin geneigt sind. In einem solchen Fall kann eine vorspannungsartige Kraft auch ohne Sicherung der Arme durch eine Haube oder einen Träger erreicht werden. Damit ist es dann nur noch zu gewährleisten, dass sich die Arme nicht vom Messmaschinenadapter lösen werden, wenn etwa ein unerfahrener Benutzer versucht, Taststifte aus dem Halter zu entfernen, obwohl diese sich noch in der Produktion befinden oder auf einem Träger angeordnet sind, von dem sie momentan nicht entfernt werden dürfen.

Aus dem Nachfolgenden wird zudem ersichtlich sein, dass Vorteile erhalten werden, wenn zur Gewährleistung der Anlage von Anlageflächen am Messmaschinenadapter in der jeweiligen Sicherungsposition die Haube pressend und/oder der Träger spreizend auf die Wechselwirkungsbereiche einwirkt. Dazu können die jeweiligen Kontaktbereiche leicht gegen die Achse eines senkrecht in seinem Messmaschinenadapter stehenden Taststiftes geneigt sein, sodass das axiale Aufsetzen des Taststifthalters auf einen Träger bzw. das Aufsetzen der Haube die gewünschte Sicherung bewirken kann. Es sei erwähnt, dass von einer allgemein parallelen Ausrichtung insbesondere dann ausgegangen werden kann, wenn der Neigungswinkel zur Schaftachse kleiner als 15° ist, wobei der Neigungswinkel typisch dort, wo der Messmaschinenadapter einen zylindrischen oder aus anderen Gründen geraden Bereich aufweist, nicht um mehr als 10° und bevorzugt nicht um mehr als 5° von der Parallelität zur Schaftachse abweicht. Dort, wo eine leichte Neigung zur Erzielung eines Klemmens oder Spreizens der Arme dergestalt, dass die Anlageflächen an den Messmaschinenadapter in Anlage gelangen, gewünscht ist, werden Neigungen von unter 5° oftmals ausreichen.

Es ist bevorzugt, wenn der Taststifthalter mehrere Arme aufweist, die von unterschiedlichen Seiten an den Messmaschinenadapter heran bewegt werden. Insbesondere können zwei Arme von diametral gegenüberliegenden Seiten auf den Messmaschinenadapter zubewegt werden. Die Bewegung der Arme auf den Messmaschinenadapter hin kann allgemein radial erfolgen, wobei aber dort, wo mit flexiblem Kunststoff eine einstückige Ausbildung von Grundplatte und Armen geschaffen wurde, einleuchtender Weise keine exakte Radialbewegung erfolgen wird, sondern eine Art Schwenken der Arme auf den Messmaschinenadapter hin. Auch kann dieses Schwenken dort, wo der Kunststoff per se flexibel ist, nicht als radial im ganz strengen Sinne aufgefasst werden. Eine dabei erfolgende Bewegung wird sich zwar ggf. auch als Schwenkbewegung verstehen lassen, bzw. als komplexe Bewegung dann, wenn die Grundplatte in ihrer Gesamtheit leicht deformiert wird, um ein Lösen oder Sichern des Messmaschinenadapters zu erreichen. Gleichwohl werden die Bewegungen der Arme typisch so klein sein, dass auch in solchen Fällen die Bewegung noch als näherungsweise "radial" auf den Messmaschinenadapter zu aufgefasst werden kann. Besonders gering muss die Bewegung dort ausfallen, wo ein Einrasten bzw. ein formschlüssiges In-Eingriff-Treten zwischen Anlageflächen einerseits und Messmaschinenadapter andererseits erzielt wird. Der Messmaschinenadapter kann Rillen, Sacklöcher, Nuten, eine oder mehrere Querbohrungen usw. besitzen, in welche jeweils entsprechend konturierte Anlageflächen der Arme eindringen. Es sei im Übrigen erwähnt, dass Messmaschinenadapter oftmals Zapfen oder dergleichen auf der im Gebrauch zum Messmaschinenarm hingewandten Seite aufweisen, um sicherzustellen, dass geneigte Schäfte in der richtigen Richtung ausgerichtet sind usw.. In einem solchen Fall kann der Taststifthalter einleuchtender Weise eine Konturierung aufweisen, die es ermöglicht, den Messmaschinenadapter ohne Weiteres in der richtigen Position aufzunehmen. Dies trägt dazu bei, dass der Messmaschinenadapter in seiner korrekten Ausrichtung in den Halter gelangt und es kann ggf. auch erreicht werden, dass in einem solchen Fall ein schräger Schaft in der erforderlichen Orientierung korrekt montiert wird. Die Konturierung für den Eingriff der Anlagenflächen am Messmaschinenadapter kann durch eine Rille eine Nut, ein Sackloch und dergleichen realisiert sein.

In einer besonders bevorzugten Variante wird der Taststifthalter Arme an diametral gegenüberliegenden Seiten aufweisen. Dort, wo der Messmaschinenadapter durch einen Körper mit zylindrischer Form gebildet ist, können die Arme an gebogenen Backen vorgesehen oder durch solche Backen gebildet sein, die ggf. an den Zylindern bzw. dem Kegelstumpf anliegen und dabei, falls derartiges daran vorgesehen ist, in Rillen, Nuten, Sacklöcher und dergleichen vorhandene Ausnehmung oder Aussparung eindringen können.

Die Verwendung mit nur zwei Armen, Backen oder dergleichen und somit der zangenartige Zugriff auf den Messmaschinenadapter hat den Vorteil, dass zwischen den Backenkanten soviel Platz gelassen werden kann, dass der Taststift trotzdem noch leicht an seinem Messmaschinenadapter ergriffen werden kann.

Wenn mehrere Taststifthalter gemeinsam durch die Produktion geführt werden sollen, ist es besonders bevorzugt, Träger für die Taststifthalter zu verwenden, bei welchen die jeweils aufgesetzten Taststifthalter in einer Reihe angeordnet sind. Die Anordnung der Taststifthalter in einer Reihe vereinfacht nämlich einerseits die Bestückung des Trägers sowie die Entnahme der Taststifthalter vom Träger sowohl bei manueller Bestückung wie auch mit einem Greifarm oder dergleichen und erleichtert andererseits auch die Handhabung bei der Produktion. Um ungeachtet der langgestreckten Nebeneinander-Anordnung der Taststifte in ihren Haltern auf dem Träger eine besonders hohe Packungs-Dichte zu erzielen, sind dann bevorzugt mehrere Träger miteinander zu verbinden, wodurch mehrere Reihen eng nebeneinander liegen. Dies erleichtert die Handhabung etwa bei Wärmebehandlungen, im Versand und so weiter.

Um für den Versand bzw. die Einlagerung von Trägern mehrere einzelne Träger zu einer Fläche miteinander zu verbinden, können an den Trägern Formschlusselemente gebildet sein, die mit komplementären Formschlusselementen auf angrenzenden Trägern paarweise gekoppelt werden können.

Wünschenswert und vorteilhaft ist auch, wenn sich die Arme sowohl oberhalb wie auch unterhalb der Grundplatte erstrecken. Dies erlaubt eine Sicherung einerseits durch Aufsetzen einer Haube oder eines anderen Aufsatzes, um auf die oberen Arme radial von außen drückend einzuwirken und andererseits mit dem Träger, auf den der Taststifthalter insbesondere während der Produktion aufgesetzt werden kann, ein Spreizen der Arme in die Fixierungsposition zu bewirken. Der Träger ist demnach typisch in jenem Bereich, auf welchem der Halter im Gebrauch aufsitzt, zumindest auf zwei gegenüberliegenden Seiten von seiner unteren Basis nach oben hin konisch zusammenlaufend gebildet. Diese konische Ausbildung erleichtert einerseits das Aufstecken der Halter auf den Träger, weil der Halter damit besser zentriert und leichter fixiert wird. Aus diesen Gründen wird die konische Ausbildung auch ausgeprägter sein als rein zur leichteren Herstellung der Träger bereits aus fertigungstechnischen Gründen bevorzugt. Der Neigungswinkel der konisch geneigten Seiten wird demnach typisch etwa 5 bis 10° gegen die vertikale Achse betragen.

Es sei im Übrigen erwähnt, dass die Unterseite des Taststifthalters so ausgebildet werden kann, dass mit bestimmten Trägern eine feste Anlage der Anlagenflächen in Sicherungsposition am Messmaschinenadapter erreicht wird, während mit anderen Trägern eine manuelle oder maschinelle Betätigung eines Taststifthalters zur Taststiftfreigabe möglich ist. Es sei erwähnt, dass dort, wo Taststifthalter auf Träger aufgesetzt werden, diese Träger dazu dienen können, mehrere Taststifthalter simultan zu tragen. Damit können eine Reihe oder Anzahl von Taststifthaltern gemeinsam durch die Produktion geführt werden, eine Konfektionierung von Taststift-Bestellungen für Kunden vorgenommen werden, Sätze von Taststiften an Koordinatenmessmaschinen gemeinsam bereit gestellt werden usw.

Während es ohne Weiteres möglich ist, den Taststifthalter so auszugestalten, dass über jedem Taststift eine separate Haube liegt, ist dies nicht zwingend und es ist ohne Weiteres möglich, mehreren Taststiften, die in ihren jeweiligen Haltern gemeinsam auf einem Träger angeordnet sind, gemeinsam eine Haube zuzuordnen. Dabei ist dann selbst bei Verwendung mit großen Trägern für jene Taststifthalter, auf denen eine für mehrere Halter gemeinsam verwendete große Haube nicht unmittelbar auf jedem Halter aufsitzt, etwa, weil der Träger mehrere Lücken aufweist, durch die Anordnung auf dem Träger noch eine sichere Fixierung der Taststifte gegeben.

Es ist besonders bevorzugt, wenn der Taststifthalter für die Aufnahme einer den gehaltenen Taststift charakterisierenden Angabe ausgebildet ist. Die Charakterisierung des Taststiftes kann beispielsweise durch Markierung auf einer geeigneten, hinreichend großen Fläche geschehen. Es können mehrere, voneinander getrennte Flächen vorhanden sein, beispielsweise, um auf einer der Flächen eine maschinenlesbare optische Kennzeichnung und auf einer anderen Fläche eine Kennzeichnung in Klartext vorzusehen, die es einem Benutzer sofort erlaubt, den Taststift zu identifizieren. Dazu können Merkmale wie Schaftlänge, Kugeldurchmesser, Schaftmaterial usw. angegeben sein. Weiter ist es möglich, für die Kenzeichnung des Taststiftes auch einen RFID-Tag oder dergleichen am bzw. im Halter vorzusehen.

Schutz wird auch beansprucht für eine Taststifthalteranordnung, bei welcher ein oder mehrere Taststifthalter der Erfindung auf einen Träger aufsetzbar sind. Der Träger wird typisch ebenfalls aus Kunststoff gebildet sein und so robust, dass er problemfrei in der Produktion oder bei einem Endkunden an einer Koordinatenmessmaschine eingesetzt werden kann. Die Verwendbarkeit jener Kunststoffe, die für den Träger einsetzbar sind, auch für den Halter sei erwähnt. Die genauen Merkmale der beanspruchten Taststifthalteranordnung sind im Anspruch 8 definiert.

Weiter wird Schutz beansprucht für ein Verfahren zur Herstellung eines Taststiftes unter Verwendung eines Taststifthalters wie vorstehend beschrieben, wobei vorgesehen ist, dass zunächst ein Messmaschinenadapter eines Taststiftes in der Aufnahme für den Messmaschinenadapter des Taststifthalters angeordnet wird und dann zumindest einer der Schritte ausgeführt wird, dass der Taststifthalter auf einem Träger angeordnet wird, Tasterhalter und/oder Träger beschriftet werden; der in der Aufnahme des Taststifthalters angeordnete Messmaschinenadapter gereinigt wird, insbesondere mittels CO₂-Schneestrahlreinigung; ein Schaft im Messmaschinenadapter angeordnet wird, bevorzugt ein Schaft, an dem bereits eine Tastspitze vorgesehen ist, beispielsweise durch Kleben oder Einlöten, wobei das Anordnen des Schaftes im Messmaschinenadapter auch die zusätzliche Verwendung von Klebstoff zum Einkleben des Schaftes im Adapter umfassen kann; die Verklebung im Ofen ausgehärtet wird; eine Sichtkontrolle erfolgt; und dann, ggf. nach Abnahme des Taststifthalters von einem Träger, eine Haube für die Einlagerung und/oder für den Transport aufgesetzt wird. Die genauen Merkmale des beanspruchten Verfahrens sind im Anspruch 9 definiert.

Es ist einsichtig, dass in einem bevorzugten Verfahren typisch mehrere bzw. alle der oben aufgeführten Schritte ausgeführt werden.

Die Erfindung wird im Folgenden beispielsweise anhand der Zeichnung beschrieben. In dieser ist dargestellt durch
- Fig.1: eine Hälfte eines Taststifthalters der vorliegenden Erfindung mit einem zugeordneten Taststift sowie den Teilen einer Haube und eines Trägers, welche mit dem Taststifthalter zur Sicherung des Taststiftes in Eingriff treten sollen, in einer schematischen Querschnitts-Ansicht;
- Fig. 2a und b: ein Taststifthalter der vorliegenden Erfindung in perspektivischer Ansicht, wobei nur eine Hälfte dargestellt ist;
- Fig. 2c: der Taststifthalter der Fig. 2a und 2b mit eingesetztem Taststift;
- Fig. 3: eine schematische Schnitt-Ansicht durch einen weiteren Taster;
- Figur 4a: eine Darstellung eines leeren Trägers aus mehreren Perspektiven;
- Figur 4b: die entsprechenden Ansichten eines Trägers mit einem einzelnen aufgesetztem leeren Halter

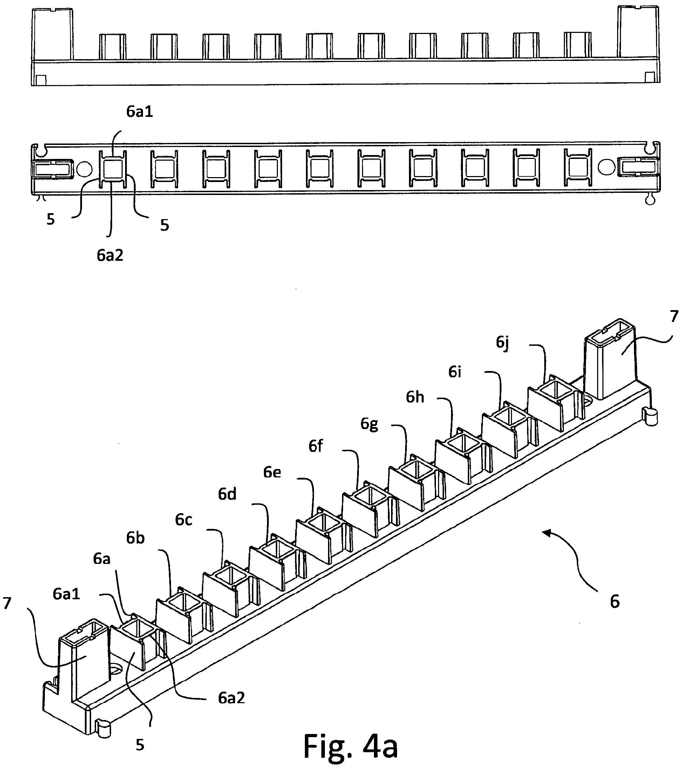

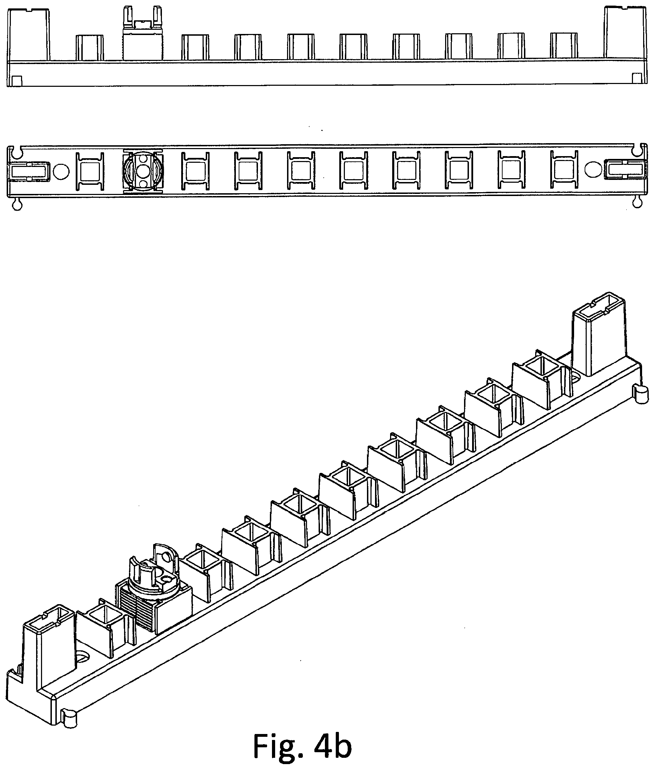

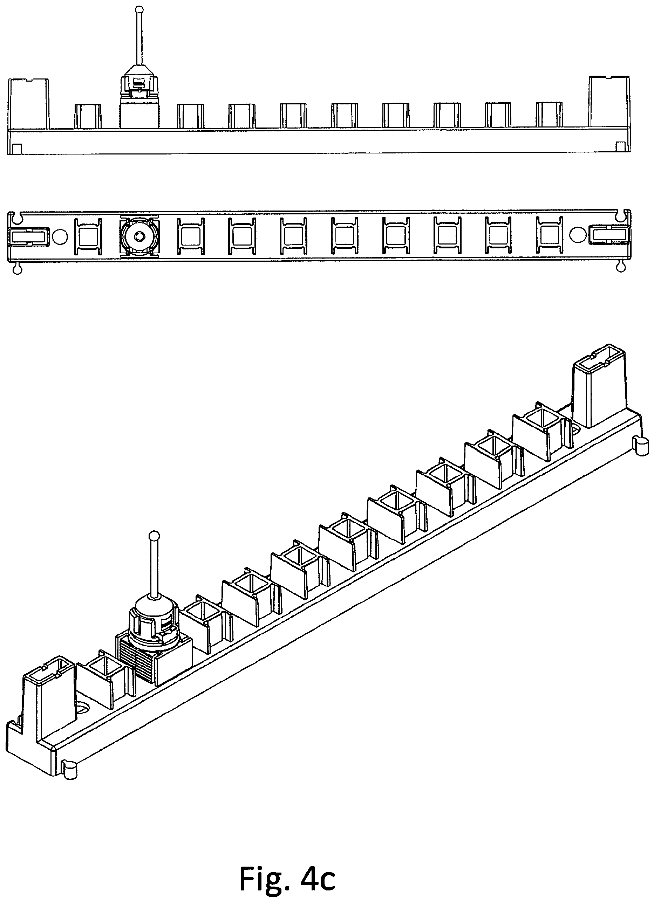

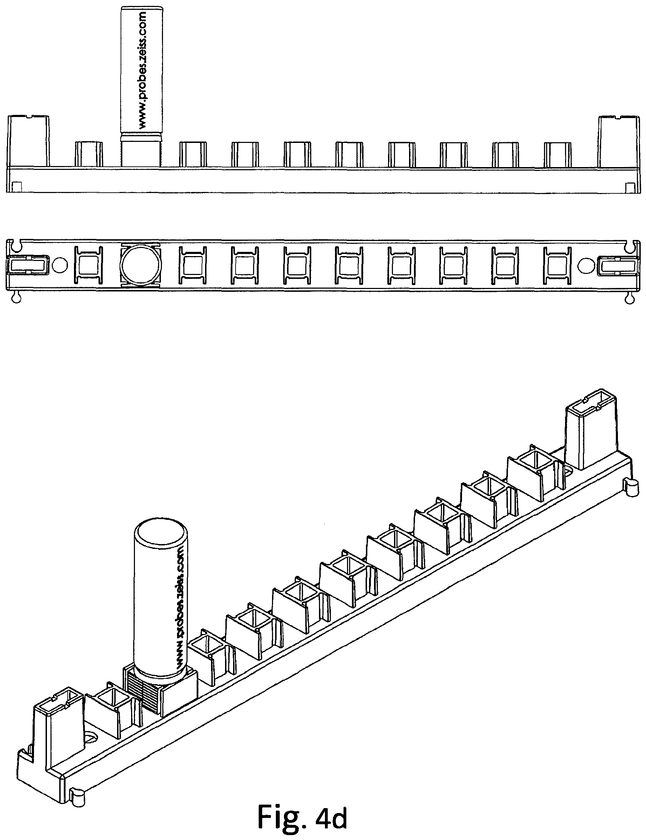

- Figur 4 c: die Ansicht von Figur 4b, wobei ein Taststift im Halter angeordnet ist;
- Figur 4 d: die Anordnung von Figur 4c, wobei noch eine Haube auf den Taststift Halter gesetzt ist.

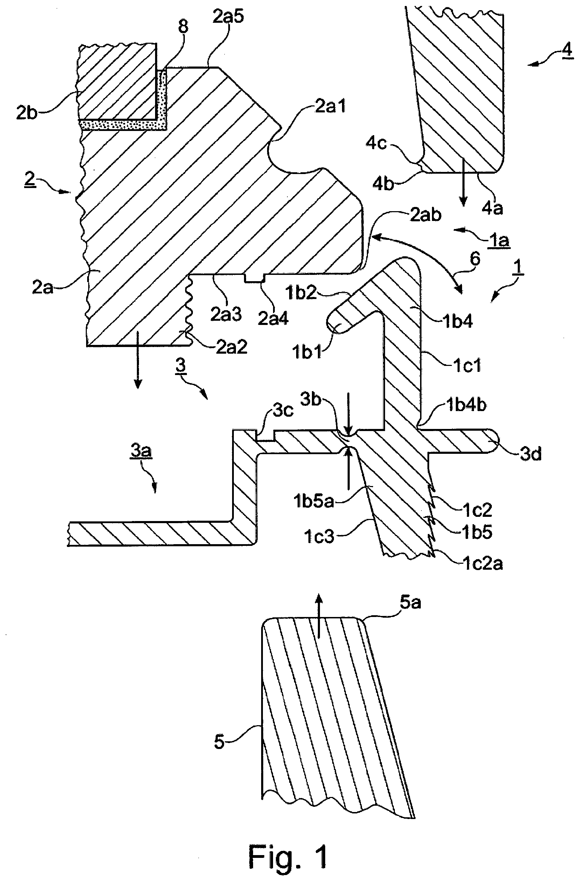

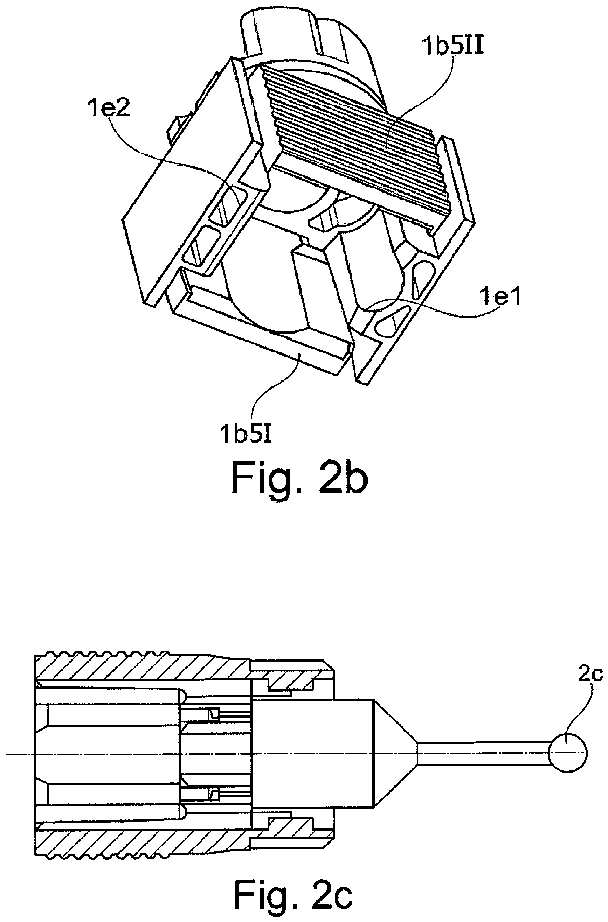

Nach Fig. 1 umfasst ein allgemein mit 1 bezeichneter Taststifthalter 1 für einen Taststift 2, der einen Messmaschinenadapter 2a, einen Schaft 2b und ein Tastende 2c (vgl. Fig. 2c, in Fig. 1 nicht dargestellt) besitzt, einen Körper, der zur Aufnahme des Taststiftes ausgebildet ist und ein bewegliches Sicherungsmittel 1b daran aufweist, wobei der Körper 1a eine Grundplatte 3 besitzt, welche zur Aufnahme des Messmaschinenadapters 2a in einem Bereich 3a ausgebildet ist, wobei das Sicherungsmittel 1b Anlageflächen 1b1 aufweist, die relativ zur Ebene der Grundplatte 3, vgl. Pfeil 9, in Anlage auf den im Körper vorgesehenen Messmaschinenadapter 2a vgl. dort Eintiefung 2a1 beweglich sind, und das Sicherungsmittel Wechselwirkungsbereiche 1c1, 1c2, 1c3 aufweist, um die Sicherungsposition der Anlagenflächen 1b1 in Anlage am Messmaschinenadapter zu zwingen, und zwar, dort in den Eintiefungen 2a1 vermittels einer Haube 4, deren untere Kante angedeutet ist, oder eines Trägers 5, präziser mittels einer am Träger vorgesehenen Trägerfläche 5 für das Aufsetzen des Taststifthalters auf seinem Träger, wobei die Wechselwirkung des Taststifthalters mit Haube bzw. Trägerfläche an den Wechselwirkungsbereichen die Sicherungsmittel in ihre Sicherungslage zwingt.

Der Taststifthalter 1 ist im vorliegenden Ausführungsbeispiel wie möglich und bevorzugt einstückig aus flexiblem, in Kälte nicht versprödendem und bei Temperaturen bis mind. 120°C formbeständigem Kunststoff gebildet und so stabil, dass er ohne Weiteres in der Produktion eingesetzt werden kann, um einen im Taststifthalter 1 angeordneten Messmaschinenadapter 2a zu reinigen, insbesondere mit CO₂-Schnee zu reinigen, einen mit Tastspitze versehenen Schaft 2b in den Messmaschinenadapter 2a einzukleben und den Klebstoff aus dieser Klebung gemeinsam mit dem Taststifthalter in einem Wärmeofen zur Aushärtung anzuordnen und nachfolgend den Taststifthalter mit Taststift unter einer Haube 4 anzuordnen und einzulagern, bevor der Taststift in dem Halter mit Haube versendet wird. Der Kunststoff des Körpers 1 ist, sofern weitere Schritte wie Reinigung mit Flüssigkeiten und dergleichen für erforderlich angesehen werden, ohne Weiteres auf derartige zusätzliche Beanspruchungen ausgelegt. Im dargestellten Ausführungsbeispiel wird Polysulfon verwendet, weil dieses sowohl in Hitze wie auch in Kälte hinreichend temperaturbeständig ist. Dieses Material wird hier sowohl für den Taststifthalter 1 wie auch für dessen Träger 6 verwendet, so dass beide gemeinsam in der Produktion den gleichen Prozessbedingungen standhalten. Dass andere Materialien verwendbar wären, sei erwähnt.

Das Sicherungsmittel 1b hat auf der im Gebrauch vom Koordinatenmessmaschinenarm abgewandten Seite (von der aus auch die Haube aufgesetzt wird und zu welcher hin die Taststiftspitze liegt), ein Haken- oder Rastende, das zum Einrasten am Messmaschinenadapter bzw. zum In-Eingriff-Treten damit eine Anlagefläche 1b1 besitzt, der eine korrespondierende Eintiefung 2a1 am Messmaschinenadapter 2a zugeordnet ist.

Dabei besitzt das Sicherungsmittel 1b weiter eine schräge Gleitfläche 1b2 am Haken- oder Rastende, die so geneigt und angeordnet ist, dass bei Einsetzen des Messmaschinenadapters in den Halter die radial außen liegende Unterkante 2ab des Messmaschinenadapters 2a darauf aufgleitet und dabei den Haken wegdrücken kann, bis der Messmaschinenadapter 2a mit seinem Gewindebereich 2a2 in den Bereich 3a für die Aufnahme des Messmaschinenadapters 2a gelangt ist.

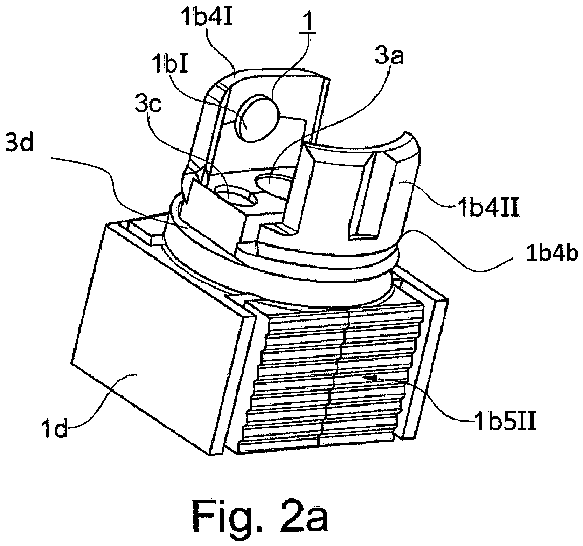

Aus Fig. 1 und Fig. 2 ist auch ersichtlich, dass zum Sicherungsmittel 1b zwei Arme 1b4 und 1b5 gehören, wobei einer der Arme 1b4 oberhalb der Grundplatte 3, d.h. zum Taststift 2 hin, vorgesehen ist und der andere Arm 1b5 unterhalb der Grundplatte. Die Arme sind so massiv und steif ausgebildet, dass beide Arme gemeinsam bewegt werden, wenn auf einen der Arme Druck in radialer Richtung ausgeübt wird, d.h. in einer Richtung senkrecht auf die Schaftachse eines normal auf die Fläche 2a3 stehenden Schaftes. Damit die Bewegung der Arme gemeinsam und als Verschwenkung erfolgen kann, ist die Grundplatte im Bereich des Übergangs zu den Armen hin mit einer Verjüngung versehen, wie in Fig. 1 an der Stelle 3b durch die Pfeile angedeutet, die die Stelle verringerter Dicke markieren. Eine allgemein radiale Krafteinwirkung auf die Arme bewirkt eine Deformation dieser Verjüngung 3b und somit wird das Rastende hin- und her geschwenkt, wie durch Pfeil 9 angedeutet.

Radial außerhalb der Arme 1b4 und 1b5 ist auf der Ebene der Grundplatte 3 ein Ansatz für die Haube vorgesehen, auf welchem die Unterkante 4a der Haube 4 aufsetzen kann.

Um beim Aufsetzen der Haube zu gewährleisten, dass die Anlagefläche 1b1 des Sicherungsmittels 1b fest in der Eintiefung 2a1 liegt, ist der Arm 1b4 mit einer leicht geneigten Aufgleitfläche 1b4a für die Kante 4b der Haube 4 vorgesehen, sodass der Arm 1b4 durch das Aufsetzen der Haube 4 nach innen gedrängt wird. Damit die Haube selbst ebenfalls am Arm 1b4 zurückgehalten werden kann, ist an der Unterkante ein Vorsprung bzw. eine Anformung 4c vorgesehen, die in eine Eintiefung 1b4b eindringt und die Haube gegen Herabfallen sichert. Gleiches gilt für den Arm auf der diametral gegenüberliegenden Seite.

Diese Anformung 4c wird bevorzugt rund um den Taststifthalter umlaufen, und zwar, wie besonders in Fig. 2a zu erkennen, etwas beabstandet vom Ansatz 3d . Die Haube kann demnach außen an ihrem Außenrand etwas aufgeweitet sein, was das Aufstecken erleichtert und zugleich zusammen mit der umlaufenden Anformung 4c die Stabilität erhöht. Dies ist insoweit vorteilhaft, als bei sehr weichem und damit wenig sprödem Kunststoff die Haube gleichwohl sicher zurückgehaltenwird und dennoch soweit gegen Deformation geschützt ist, dass ein Taststift freigebendes Spreizen der Arme sicher vermieden wird.

Es sei darauf hingewiesen, dass die schematische Zeichnung nach Fig.1 insoweit von Fig. 2 abweicht, als in Fig, 1 die Eintiefung 1b4b unmittelbar über dem Ansatz angeordnet ist, während in Fig. 2a der Ansatz 3d etwas beabstandet von der Eintiefung 1b4b dargestellt ist. Es wird aus dem Vorstehenden zu verstehen sein, dass die in Fig. 2 a gezeigte Anordnung in der Realität bevorzugt ist.

Die Flexibilität des Kunststoffes für den Taststifthalter 1 ist so groß, dass die Kante 2a1 des Messmaschinenadapters 2a das Sicherungsmittel problemfrei nach außen wegdrücken kann, wenn der Messmaschinenadapter 2a bzw. ein vollständiger Taststift 2 in den Halter eingesetzt wird. Das Wegdrücken erlaubt, dass der Gewindebereich 2a2 des Messmaschinenadapters 2a in den Bereich 3a für die Aufnahme des Messmaschinenadapters 2a gelangt. Danach wird sich das Sicherungsmittel zurückbewegen und am Messmaschinenadapter 2a einrasten. Die bereits beschriebene Verjüngung der Grundplatte zu den Armen hin trägt dazu bei, diese Bewegung des als Rasthaken ausgebildeten Vorderendes 1b3 des Sicherungsmittels 1b zu erlauben, ohne die Grundplatte 3 des Körpers in sich zu deformieren.

Die Verjüngung 3b ist dabei zugleich so geformt, dass das Sicherungsmittel mehrfach ohne Ermüdung des Grundplattenkörpers wie beschrieben nach außen bewegt werden kann, weshalb der Messmaschinenadapter 2a eines Taststiftes 2 unter Aufgleiten von dessen Außenkante 2ab auf der Gleitfläche 1b2 eingesetzt werden kann bzw. durch Pressen auf die Wechselwirkungsfläche 1c2, die zu diesem Zweck mit einer Riffelung 1c2a versehen ist. Die Ausgestaltung des Kunststoffkörpers des Taststifthalters 1 derart, dass auch bei mehrfachem Schwenken des Sicherungsmittels 1b unter Verformung der Verjüngung 3b keine Ermüdung auftritt, ermöglicht es, einen Taststift nicht nur im Halter zu montieren und zu versenden, sondern den Halter mit dem Taststift auch im Betrieb eines Benutzers zu verwenden, um den Taststift nach einer durchgeführten Messung ggf. wiedereinzulagern bzw. zwischen zwei Messungen an einer Koordinatenmessmaschinen zu halten.

Typisch kann der Messmaschinenadapter 2a des Taststiftes 2 an der Fläche 2a3, die im Gebrauch der Koordinatenmessmaschine zuweist, eine Anformung 2a4 besitzen, um eine korrekte Ausrichtung des Taststiftes am Koordinatenmessmaschinenarm damit zu gewährleisten, wenn der Schaft 2b nicht senkrecht auf eine zum Werkstück hin gerichtete Fläche 2a5 des Messmaschinenadapters steht. In einem solchen Fall kann der Taststifthalter 1 mit einer entsprechenden komplementären Anformung 3c versehen seien, um eine bestimmte Ausrichtung des Taststiftes im Halter zu gewährleisten. Dies kann hilfreich sein, wenn auf bestimmte Weisen geformte Hauben 4 verwendet werden sollen oder der Taststift etwa bei Benutzung aus dem Taststifthalter 1 der vorliegenden Erfindung in einer korrekten Ausrichtung entnehmbar sein soll.

In Figur 4 ist nun der Träger 6 genauer dargestellt, auf welchem der Taststifthalter während eines Produktionsprozesses, für den Transport und/oder eine Lagerung sowie für die Bereithaltung an einer Koordinatenmessmaschine während einer Messaufgabe aufgesetzt werden kann. Der Träger 6 ist geradlinig ausgebildet und weist eine Anzahl äquidistanter Erhebungen auf, im Beispiel Erhebungen 6 a bis 6 j, auf welche der Taststifthalter gesetzt werden kann.

Seitlich neben den Erhebungen sind an den Enden der Reihe Griffbereiche 7 angeordnet, an denen der Halter ergriffen werden kann.

Die einzelne Erhebung, beispielsweise Erhebung 6a, ist jeweils mit zwei Trägerflächen 5 gebildet, die nach oben hin leicht konisch aufeinander zulaufen, wie in der Seitenansicht von Figur 4 sowie insbesondere in Figur 1 im Schnitt gut erkennbar dargestellt ist. Das konische Zulaufen erleichtert das Aufstecken der Taststifthalter und trägt dazu bei, dass der Taststifthalter an seinem Wechselwirkungsbereich 1c3 mit der schrägen Trägerfläche 5 so in Wechselwirkung tritt, dass die Anlagefläche 1b1 in die Eintiefung 2a1 gelangt und den Messmaschine Adapter entsprechend fixiert. Das Eindringen der Anlagefläche 1e1 in die Eintiefung 2a1 wird durch die Stelle 3b verringerter Dicke unter begünstigt, da diese zu einer Schwenkbarkeit der Anlagefläche 1b1 beiträgt.

Die Trägerrippen oder Trägerflächen 5 sind zur Erhöhung der Stabilität durch Querstrukturen 6a1 und 6a2 miteinander verbunden, die nach innen weg von der Außenkante der Trägerrippe versetzt sind, und zwar um eine Strecke 1, die ausreicht, um die auf der Unterseite der Taststifthalter vorgesehenen Ansätze 1e1 und 1e2 aufzunehmen. Wenn - anders als in den Figuren 4 dargestellt - die Querstrukturen komplementär zum Ansatz 1 geformt sind, ist eine eindeutige Orientierung des Taststiftes im Halter gewährleistet.

Ein Träger, auf welchem Taststifthalter 1 in der Produktion oder im Transport aufgesetzt werden können, umfasst für jeden Taststifthalter zwei allgemein blattförmige Trägerflächen 5, auf deren Kanten der Träger aufsitzt. Dazu wird der untere Arm 1b5 auf seiner radial innen liegenden Seite mit einer geneigten Fläche versehen, die den Wechselwirkungsbereich 1c3b bildet, wobei die Form der Trägerfläche 5, die Neigung und der Zwischenbereich zwischen einerseits dem Arm 1b5 und andererseits der Außenseite der für die Bildung des Bereiches 3a zur Aufnahme des Gewindes 2a2 des Messmaschinenadapter 2a vorgesehenen Wandung so aufeinander abgestimmt sind, dass der untere Arm bei Aufsetzen des Taststifthalters auf den Taststifthalter durch die Trägerfläche 5 nach außen gedrängt wird, um somit eine Verschwenkung des oberen Armes 1b4 dergestalt zu bewirken, dass Anlagefläche 1b1 in die Eintiefung 2a1 am Messmaschinenadapter 2a gedrängt wird und eine sichere Fixierung des Messmaschinenadapters 2a am Taststifthalter 1 gewährleistet ist.

Um den Taststifthalter 1 gegen Herunterfallen vom Träger 6 zu sichern, ist auf der Innenseite des Armes 1b5 nahe der Grundplatte 3 eine Eintiefung wie eine flache Rille vorgesehen, die bei Aufsetzen des Taststifthalters auf die Trägerfläche mit einer komplementären, im Beispiel also erhöhten (und komplementären) Anformung an der Trägerfläche 5 in Eingriff tritt, um den Taststifthalter 1 am Träger zu fixieren.

In Fig. 1 ist zugleich zu erkennen, dass die Außenfläche etwas von der unteren Basis zur oberen Kante hin geneigt ist, was zusammen mit der Außenfläche der gegenüberliegenden Seite ein konisches Zulaufen ergibt.

In Fig. 2a ist in der perspektivischen Ansicht zu erkennen, dass der Taststifthalter wie bevorzugt zwei diametral gegenüberliegende Sicherungsmittel besitzt, um einen Messmaschinenadapter (in Fig. 2a nicht gezeigt) zu fixieren. Für einen Taststifthalter mit zylindrischem Messmaschinenadapter können die Sicherungsmittel mit entsprechend dem Zylinderradius des Messmaschinenadapters gekrümmten Backen versehen sein, die in Fig. 2a entsprechend der Bezugszahl 1b4 für den Arm des Sicherungsmittels in Fig. 2a bezeichnet sind als 1b4I und 1b4II. Eine derartige Anordnung mit diametral gegenüberliegenden Backen hat den Vorteil, dass zum Entnehmen eines Taststiftes die zugeordneten unteren Arme 1b5II und 1b5I mit Zeigefinger und Daumen der einen Hand zusammengepresst werden können, während der Taststift ggf. mit der anderen Hand aus dem Halter entnommen werden kann. Die Backen 1b4I, 1b4II erstrecken sich dazu nur soweit um den zylindrischen Messmaschinenadapter herum, dass noch genügend Greiffläche zur Verfügung steht. Wie in Fig. 2a ersichtlich ist, ist an den Flächen quer zu den geriffelten Angriffsflächen 1 der Arme 1b5I, 1b5II ein jeweiliges Feld 1d vorgesehen, an welchem eine Beschriftung aufgebracht werden kann, um Details über den zu haltenden Taststift zu vermerken. Die Beschriftung kann insbesondere maschinell mit maschinenlesbarem Code erfolgen und/oder in Klartext; dass zusätzlich oder alternativ am Halter RFID-Tags vorgesehen sein können, um eine Identifikation des Halters und/oder des darin befindlichen Taststiftes zu ermöglichen, sei ergänzend erwähnt.

Die Seitenflächen, die die Felder 1d tragen, sind auf ihren Innenseiten im Bereich zwischen den Armen 1b5I, 1b5II mit einem Vorsprung 1e1, 1e2 versehen, der verhindert, dass die Arme 1b5II, 1b5I beliebig weit nach innen gepresst werden können. Die Vorsprünge oder Ansätze 1e1, 1e2 dienen also als Anschlag für die Arme 1b5I, 1b5II. Die Breite der Ansätze 1e1, 1e2 bestimmt, wie weit die Arme zusammengepresst werden können. Diese Breite ist so gewählt, dass die Arme 1b5I, 1b5II zunächst nach innen gepresst werden können, bis die Backen 1b4I, 1b4II den Taststift 2 vollkommen frei geben und dieser problemfrei entnommen werden kann. Die Ansätze 1e1, 1e2 sind dabei gleichwohl so breit, dass die Arme selbst bei übermäßiger Krafteinwirkung nicht zu weit bewegt werden und ergo der Taststifthalter vor Zerstörung dadurch geschützt ist. Eine Überdehnung der Verjüngung 3b wird demnach verhindert.

Es sei im Übrigen darauf hingewiesen, dass vorliegend von einem Verschwenken des Sicherungsmittels 1b gesprochen wird bzw. von einer Radialbewegung der Haken. Dabei ist aus dem Vorstehenden bereits einsichtig, dass die reale Bewegung, die vorliegend vereinfacht als "radial" bezeichnet wird, nur näherungsweise radial erfolgt. Zudem versteht sich, dass ggf. keine Verjüngung 3b am Grundplattenkörper vorgesehen sein muss, insoweit also eine Freigabe des Taststiftes 2 aus dem Taststifthalter 1 etwa auch durch Grundplattendeformation erfolgen könnte und darüber hinaus selbst im dargestellten Ausführungsbeispiel von Fig. 1 real womöglich eine Kombination aus sowohl Deformation des Grundplattenkörpers an der Verjüngung wie auch des restlichen Bereiches erfolgt, sodass die hier als Schwenkbewegung bezeichnete Bewegung der Anlagefläche 1b1 relativ zur Grundplatte jedenfalls keine reine Schwenkbewegung darstellt.

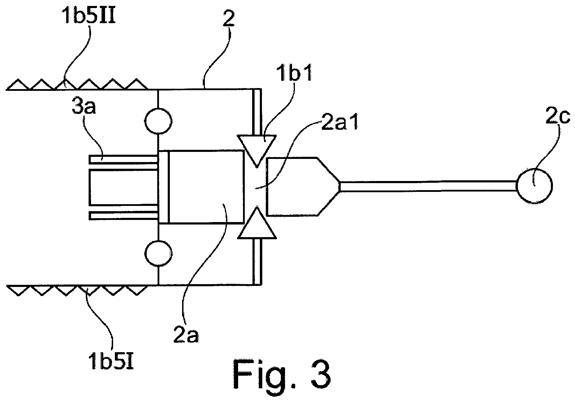

Es sei zudem erwähnt, dass ggf. andere Ausbildungen möglich sind als vorstehend angegeben wurde. Fig 3 zeigt ein solches anderes Ausführungsbeispiel, das dort mit einem Scharniergelenk oder dergleichen versehen ist, wie im Ausführungsbeispiel von Fig. 3 bei Bezugszahl 10 angedeutet. Obschon sich die Funktion der einzelnen Elemente dem Fachmann ohne weiteres erschließt, sind zumindest für bestimmte Elemente die gleichen Bezugszahlen in Fig. 3 eingefügt wie in den Fig. 1 und 2, um auch dem technischen unbedarfteren Leser die Funktionalität der skizzierten Anordnung zu erschließen.

Zurückkehrend zu Fig. 2b sei darauf hingewiesen, dass die Unterseite, hier durch Konturierung der Ansätze 1e1, bevorzugt so ausgestaltet ist, dass ein Taststifthalter nur in einer bestimmten Ausrichtung auf einen zugeordneten Träger gesetzt werden kann. Dies bietet insoweit Vorteile, als gerade durch die Anformungen 2a4 an einem Messmaschinenadapter und die komplementäre Ausbildung 3c an der Grundplatte des Taststifthalters eine gegebene Ausrichtung des Taststiftes im Taststifthalter erreicht werden kann. Durch die Ausformung derart, dass der Taststifthalter nur in einer bestimmten Orientierung auf einen Träger gesetzt werden kann, ist sichergestellt, dass der Taststift etwa bei einer Koordinatenmessmaschinen auf einem Träger in korrekter und erwarteteter Weise zur Verfügung steht.

Zudem kann so leichter erreicht werden, dass stets die korrekten Taststifte zur Verfügung stehen- wenn nämlich mit dem Träger eine korrekte Ausrichtung der Halter derart erzwungen wird, dass stets eine Taststifthalter-Fläche nach vorne weist, die in Klartext oder maschinenlesbar beschriftet ist, kann die Halterbestückung ohne weiteres schnell überprüft werden, was die Verwendung der für eine konkrete Meßaufgabe korrekten Taststifte gewährleistet. Die Anordnung von Identifikationsflächen parallel zur Längskante und die zwischen den einzelnen Haltern liegenden, gegeneinander auf Druck beweglichen Arme trägt dazu bei, dass bei Handhabung des Trägers nicht versehentlich ein Taststift ergriffen und entfernt wird.

Die Anordnung wird verwendet wie folgt:
Zunächst wird in einen noch unbeschrifteten Taststifthalter 1 ein Messmaschinenadapter 2a eingesteckt, an dem sich noch kein Schaft 2b befindet. Bei Einstecken des Messmaschinenadapters gleitet seine Kante 2ab auf der Gleitfläche 1b2 des Armes 1b4 auf und drängt diesen dabei nach außen, worauf die Anlagefläche 1b1 an der nach oben hin zum vorgesehenen Tastende konisch zulaufenden Form des Messmaschinenadapters 2 bei weiterem Einschieben vorbeigleitet, bis die Anlagefläche 1b1 in die Eintiefung 2a1 gelangt, worauf der Arm 1b4 aufgrund der Elastizität des Kunststoffes der Grundplatte 3 wieder in seine Ausgangslage zurück drängt. Gleiches passiert auf der nicht gezeichneten Seite. Dies fixiert den Messmaschinenadapter im Halter.

Der Messmaschinenadapter 2a ist somit an dem Taststifthalter 1 sicher gehalten, solange gewährleistet ist, dass sich der Arm 1b4 nicht nach außen bewegt. Dazu werden für die weitere Produktion mehrere Taststifthalter, die mit Messmaschinenadapter 2a ohne Schaft 2b versehen sind, gemeinsam auf einem Träger angeordnet. Durch Aufsetzen jedes Taststifthalters 1 auf den zugeordneten Trägerflächen 5 wird erreicht, dass sich der untere Arm 1b5 etwas nach außen bewegt und gewährleistet, dass er sich nicht nach innen bewegen kann, d.h. zur Achse des vorgesehenen Schaftes hin. Dies sichert aufgrund der einstückigen Ausbildung des Taststifthalters und insbesondere aufgrund der weitgehend starren Verbindung zwischen unterem Arm 1b5 und oberem Arm 1b4, dass die Anlagenfläche 1b1 innerhalb der Eintiefung 2a1 am Messmaschinenadapter verbleibt. Es ist somit gewährleistet, dass die Messmaschinenadapter in den Haltern verbleibt, weil die Anlageflächen 1b1 durch den Träger gehindert werden, außer Eingriff zu der korrespondierenden Eintiefung 2a1 zu treten.

Es werden nun die Messmaschinenadapter in den Taststifthaltern auf dem Träger gemeinsam gereinigt, was beispielsweise durch eine CO₂-Schneereinigung geschehen kann.

Damit sind die Messmaschinenadapter per se vorbereitet, um einen Schaft 2b einzukleben, der im Regelfall bereits mit einer Taststiftspitze versehen ist. Es wird aber einzuschätzen sein, dass in vielen Fällen unterschiedliche Schäfte und/oder Schäfte mit unterschiedlichen Tastspitzen, beispielsweise Tastkugeln aus unterschiedlichem Material und mit unterschiedlichem Durchmesser auf einem Träger angeordnet werden müssen. Um hier von vorneherein Verwechslungen zu vermeiden, wird bereits vor der Montage der entsprechenden Schäfte eine Beschriftung der Felder 1d vorgenommen. Eine solche Beschriftung kann durch einen Laser erfolgen, während die Halter auf dem Träger angeordnet sind. Der Träger ist dazu wie dargestellt ausgebildet, so dass er problemfrei durch Maschinen geführt werden kann, was entweder maschinellautomatisch und/oder von Hand geschehen kann

Nach Beschriften und somit Kennzeichnung der Halter mit Information über die jeweiligen aufzubauenden Taststifte werden dann die korrespondierende Schäfte montiert. Dazu wird Klebstoff auf geeignete Weise in eine Ausnehmung im Messmaschinenadapter 2a für den Schaft 2b eingebracht; bei dem Klebstoff wird es sich hier um einen Klebstoff handeln, der bei Wärme aushärtet. Danach können die Schäfte selbst eingesetzt werden.

Nachdem in allen Messmaschinenadaptern die korrekten Schäfte eingesetzt sind, wird der ganze Träger mitsamt der Halter und den darin angeordneten Messmaschinenadaptern, in die wiederum die Schäfte eingesetzt sind, deren Verklebung aber noch nicht ausgehärtet ist, in einen Wärmeofen verbracht, wo auf dem Träger sämtliche Taststifte gemeinsam soweit erwärmt werden, dass der Klebstoff 8 aushärtet.

Nach Aushärtung des Klebstoffes 8 wird der Träger aus dem Ofen genommen und wie erforderlich abgekühlt.

Es sei diesbezüglich erwähnt, dass die Träger in einer bevorzugten Variante aneinander anreihbar sind, wozu bevorzugt auf beiden Längskanten Formschlusselemente vorgesehen sein können, die mit entsprechenden Formschlußelementen an Längskanten anderer Träger in Eingriff treten können. Auf diese Weise wird es möglich, einerseits eine größere Anzahl an Elementen simultan handzuhaben und andererseits gleichwohl an einer Koordinatenmessmaschine auf alle momentan relevanten Taststifte leicht zugreifen zu können. Gerade um eine größere Zahl von Taststiften einer Wärmebehandlung zu unterwerfen, Taststifte zu lagern usw. ist dies von Vorteil.

Nach einer Sichtkontrolle, die erfolgen kann, während sich die Taststifthalter noch auf dem Träger befinden, und ggf. einer weiteren Reinigung, können die Hauben 4 auf die einzelnen Taststifthalter aufgesetzt werden. Dabei gleiten die Kanten der Hauben 4 an der geneigten Fläche 1b4a der oberen Arme 1b4 der Taststifthalter 1 entlang und pressen diese, soweit noch möglich und erforderlich, nach innen. Wie das Aufsetzen der Taststifthalter 1 auf den Träger 6 auch, wird hierdurch ebenfalls und unabhängig vom Träger gewährleistet, dass die Anlageflächen 1b1 in den Eintiefungen 2a1 verbleiben.

Die einzelne Haube wird dabei soweit auf den Taststifthalter aufgesetzt, dass sie auf dem Ansatz 3d der Grundplatte 3 aufsitzt und die Komplementärformungen 4c und 1b4b in Eingriff treten. Danach ist die Haube am Taststifthalter gesichert und eine feste Anlage der Anlagefläche 1b1 in Eingriff mit der Eintiefung 2a1 selbst dann noch gewährleistet, wenn der Taststifthalter 1 vom Träger 6 entfernt wird. Der Taststifthalter 1 kann nun vom Träger entfernt werden und, ggf. nach einer Zwischenlagerung, versendet werden.

Beim Endbenutzer kann der Taststifthalter auf einen Träger einer Koordinatenmessmaschine aufgesetzt werden, der abweichend von dem vorbeschriebenen Produktionsträger so ausgebildet ist, dass die Arme 1b5I, 1b5II nach innen geschwenkt werden können, beispielsweise durch eine maschinelle Betätigung, was den Taststift für die automatische Entnahme aus dem Taststifthalter freigibt. Danach kann die Haube 4 vom Taststifthalter 1 abgenommen werden.

Sofern bei der Benützung der Taststifte ein Taststift beschädigt wird und/oder Verschleiß auftritt, kann der Taststift selbst wie üblich entsorgt werden, während der zuvor mit einer Kennzeichnung versehene Taststifthalter in einer Sammelbox für die Nachbestellungen gesammelt wird. Zu gegebener Zeit kann dann anhand der gesammelten Taststifthalter und den Beschriftungen darauf ermittelt werden, welche Taststifte neu beschafft werden müssen.

Wie aus dem vorstehenden ersichtlich, ist es besonders vorteilhaft, dass jene Eintiefung, an welcher im Gebrauch der Schaft sitzt, von vorneherein freigehalten wird und auch frei zugänglich ist, sodass eine Montage der Schäfte erfolgen kann, während der Maschinenadapter im erfindungsgemäßen Taststifthalter angeordnet ist.

## Patentansprüche

1. Taststifthalter (1) für einen Taststift (2), der einen Messmaschinenadapter, einen Schaft und ein Tastende besitzt,
mit einem Körper (1a), der zur Aufnahme des Taststiftes ausgebildet ist und ein bewegliches Sicherungsmittel (1b) daran aufweist,
**dadurch gekennzeichnet, dass** der Körper
eine Grundplatte (3) aufweist, welche zur Aufnahme des Messmaschinenadapters in einer Grundplattenebene ausgebildet ist,
und
das Sicherungsmittel Anlageflächen (1b1) und Wechselwirkungsbereiche (1c1, 1c2, 1c3) aufweist,
wobei
die Anlageflächen
relativ zur Grundplattenebene in eine Sicherungsposition beweglich sind, in welcher sie in Anlage auf den Messmaschinenadapter eines im Taststifthalter angeordneten Taststiftes gelangen,
und an Armen vorgesehen sind, die sich von der Grundplattenebene weg allgemein parallel zur Schaftachse eines im Körper anzuordnenden Taststiftes erstrecken,
und
die Wechselwirkungsbereiche so ausgebildet sind, dass
das Sicherungsmittel sich durch Eingriff auf die Wechselwirkungsbereiche aus der Sicherungsposition, in der die Anlageflächen am Messmaschinenadapter anliegen, löst,
und/oder
dass vermittels einer Haube (4) bzw. eines Trägers (5) die Anlage des Sicherungsmittels in der Sicherungsposition gewährleistbar ist.

2. Taststifthalter nach dem vorhergehenden Anspruch, **dadurch gekennzeichnet, dass** die Grundplatte und das Sicherungsmittel aus Kunststoff gebildet sind, bevorzugt einstückig aus Kunststoff gebildet sind.

3. Taststifthalter nach dem vorhergehenden Anspruch, **dadurch gekennzeichnet, dass** der Kunststoff flexibel und/oder temperaturbeständig bis mindestens 120°C ist und/oder in Kälte nicht versprödend ist.

4. Taststifthalter nach dem vorhergehenden Anspruch, **dadurch gekennzeichnet, dass** mehrere Arme vorgesehen und so angeordnet sind, dass sie sich im Gebrauch von unterschiedlichen Seiten an den Messmaschinenadapter bewegen, bevorzugt radial auf diesen zu und/oder in formschlüssigen Eingriff mit einer daran vorgesehen Konturierung, insbesondere Rille und/oder Querbohrung.

5. Taststifthalter nach dem vorhergehenden Anspruch, **dadurch gekennzeichnet, dass** die Arme an zwei diametral gegenüberliegenden Seiten vorgesehen sind, um sich im Gebrauch von gegenüberliegenden Seiten auf den Messmaschinenadapter zu zu bewegen, und wobei die Arme so gestaltet sind, dass der Taststift leicht ergriffen werden kann.

6. Taststifthalter nach einem der vorhergehenden Ansprüche, **dadurch gekennzeichnet, dass** sich die Arme oberhalb und unterhalb der Grundplatte erstrecken, wobei die Wechselwirkungsbereiche für die Haube oberhalb der Grundplatte radial außen an den Armen und/oder die Wechselwirkungsbereiche für den Träger radial innen an den Armen angeordnet sind, so dass die Arme bei Aufsetzen der Haube nach innen gepresst bzw. bei Aufsetzen des Taststifthalters auf einen Träger nach außen gespreizt werden.

7. Taststifthalter nach einem der vorhergehenden Ansprüche, **dadurch gekennzeichnet, dass** er für die Aufnahme einer Charakterisierung des gehaltenden Taststiftes ausgebildet ist.

8. Taststifthalteranordnung mit mindestens einem Taststifthalter nach einem der vorhergehenden Ansprüche und einem Träger für diesen Taststifthalter, **dadurch gekennzeichnet, dass** der Träger eine für das Aufsetzen des mindestens einen Taststifthalters vorgesehene Trägerfläche besitzt, an welcher Eingriffselemente zum Eingriff mit den Wechselwirkungsbereichen der Taststifthalter-Sicherungsmittel zur Gewährleistung einer Sicherungsposition der Anlageflächen in Anlage am Messmaschinenadapter vorgesehen sind.

9. Verfahren zur Herstellung eines Taststiftes unter Verwendung eines Taststifthalters nach einem der vorhergehenden Taststifthalter-Ansprüche,
**dadurch gekennzeichnet, dass**
zunächst
ein Messmaschinenadapter in der Aufnahme des Messmaschinenadapters angeordnet wird,
und dann zumindest einer der folgenden Schritte ausgeführt wird
Anordnen des Taststifthalters auf einem Träger,
Beschriften von Taststifthalter und/oder Träger,
Reinigen des in der Aufnahme befindlichen Messmaschinenadapters, bevorzugt mittels CO₂ Schneestrahlreinigung,
bevorzugt unter vorheriger Einbringung von Klebstoff in denMessmaschinenadapter
Anordnen eines Schaftes im Messmaschinenadapter,
bevorzugt eines bereits mit Tastspitze versehenen Schaftes,
und/oder Aushärtung von Verklebungen
Sichtkontrolle und
erforderlichenfalls nach Abnahme des Taststifthalters von einem Träger,
und dem weiteren Schritt
Aufsetzen einer Haube für Einlagerung und/oder Transport.

## Claims

1. A stylus holder (1)
for a stylus (2)
comprising a measuring machine adapter, a shaft and a stylus tip,
having a body (1a)
configured to receive the stylus
and comprising a movable securing means (1b) thereon,
**characterized in that**
the body comprises a base plate (3) configured to receive the measuring machine adapter in a base plate plane
and
the securing means comprises abutment surfaces (1b1) and interaction areas (1c1, 1c2, 1c3),
wherein
the abutment surfaces
are movable relative to the base plate plane into a securing position in which they come into contact with the measuring machine adapter of a stylus positioned in the stylus holder
and are provided on arms which extend away from the base plate plane generally parallel to the shaft axis of a stylus to be positioned in the body,
and
the interaction areas are configured such that
the securing means is released by intervention with the interaction areas from the securing position in which the abutment surfaces are in contact with the measuring machine adapter
and/or
the securing position of the securing means can be guaranteed by means of a hood (4) and/or a carrier (5).

2. The stylus holder of the preceding claim, **characterized in that** the base plate and the securing means are made of plastics, preferably integrally made of plastics.

3. The stylus holder of the preceding claim, **characterized in that** the plastics material is flexible and/or temperature-resistant up to at least 120° C and/or does not become brittle at low temperatures.

4. The stylus holder of the preceding claim, **characterized by** a plurality of arms arranged to move in use from different sides to the measuring machine adapter, preferably radially towards the measuring machine adapter and/or into a positive engagement with a contouring provided thereon, in particular a groove and/or a cross-hole.

5. The stylus holder of the preceding claim, **characterized in that** the arms are provided at two diametrically opposing sides so as to move in use from opposing sides towards the measuring machine adapter and wherein the arms are configured such that the stylus is easy to grasp.

6. The stylus holder of any of the preceding claims, **characterized in that** the arms extend above and below the base plate, wherein the interaction areas for the hood are arranged radially on the outside of the arms above the base plate and/or the interaction areas for the carrier are arranged radially on the inside of the arms such that when the hood is attached, the arms are pressed inwards, and spread outwards, when the stylus holder is attached onto a carrier.

7. The stylus holder of any of the preceding claims, **characterized by** being configured to receive a characteristic of the held stylus.

8. A stylus holder arrangement comprising at least one stylus holder according to any of the preceding claims and a carrier for this stylus holder, **characterized in that** the carrier comprises a carrier surface provided for the attachment of the at least one stylus holder, the carrier surface being provided with engagement elements for engagement with the interaction areas of the stylus securing means so as to guarantee a securing position of the abutment surfaces in contact with the measuring machine adapter.

9. A method of producing a stylus
using a stylus holder of any of the preceding stylus-holder claims
**characterized in that**
first
a measuring machine adapter is provided in the receptacle of the measuring machine adapter
and then at least one of the following steps is carried out
arranging the stylus holder on a carrier,
labelling the stylus holder and/or the carrier,
cleaning the measuring machine adapter in the receptacle, preferably by means of CO₂ snow blasting,
preferably upon injection of an adhesive into the measuring machine adapter,
arranging a shaft in the measuring machine adapter,
preferably of a shaft already provided with a stylus tip,
and/or curing any bonding joints,
visual inspection
and, if necessary after removal of the stylus holder from the carrier,
and the further step of
attaching a hood for storage and/or transport.

## Revendications

1. Porte-palpeur (1) pour un palpeur (2), qui possède un adaptateur de machine de mesure, une tige et une extrémité de palpeur, avec un corps (1a) qui est configuré pour recevoir le palpeur et présente sur celui-ci un moyen de blocage mobile (1b),
**caractérisé en ce que** le corps présente une plaque de base (3), qui est configurée pour recevoir l'adaptateur de machine de mesure dans un plan de la plaque de base, et le moyen de blocage présente des faces d'appui (1b1) et des zones d'interaction (1c1, 1c2, 1c3),
dans lequel les faces d'appui sont déplaçables par rapport au plan de la plaque de base dans une position de blocage, dans laquelle elles viennent en appui sur l'adaptateur de machine de mesure d'un palpeur disposé dans le porte-palpeur, et sont prévues sur des bras, qui s'étendent à partir du plan de la plaque de base d'une façon généralement parallèle à l'axe de la tige d'un palpeur à disposer dans le corps et les zones d'interaction sont configurées de telle manière que le moyen de blocage se libère de la position de blocage, dans laquelle les faces d'appui s'appliquent sur l'adaptateur de machine de mesure, par engagement sur les zones d'interaction,
et/ou **en ce que** l'application du moyen de blocage dans la position de blocage peut être garantie au moyen d'un capot (4) ou d'un support (5).

2. Porte-palpeur selon la revendication précédente, **caractérisé en ce que** la plaque de base et le moyen de blocage sont formés en matière plastique, de préférence sont formés d'une seule pièce en matière plastique.

3. Porte-palpeur selon la revendication précédente, **caractérisé en ce que** la matière plastique est flexible et/ou résistante à la température jusqu'à au moins 120°C et/ou ne se fragilise pas dans le froid.

4. Porte-palpeur selon la revendication précédente, **caractérisé en ce qu'**il est prévu plusieurs bras qui sont disposés de telle manière qu'ils se déplacent en cours d'utilisation de différents côtés sur l'adaptateur de machine de mesure, de préférence radialement vers celui-ci et/ou en prise par emboîtement avec un contour prévu sur celui-ci, en particulier une rainure et/ou un trou transversal.

5. Forte-palpeur selon la revendication précédente, **caractérisé en ce que** les bras sont prévus sur deux côtés diamétralement opposés, afin de se déplacer en cours d'utilisation à partir de côtés opposés vers l'adaptateur de machine de mesure, et dans lequel les bras sont configurés de telle manière que le palpeur puisse être saisi facilement.

6. Porte-palpeur selon l'une quelconque des revendications précédentes, **caractérisé en ce que** les bras s'étendent au-dessus et en dessous de la plaque de base, dans lequel les zones d'interaction pour le capot sont disposées au-dessus de la plaque de base radialement à l'extérieur sur les bras et/ou les zones d'interaction pour le support sont disposées radialement à l'intérieur sur les bras, de telle manière que les bras soient pressés vers l'intérieur lors de la pose du capot ou soient écartés vers l'extérieur lors de la pose du porte-palpeur sur un support.

7. Porte-palpeur selon l'une quelconque des revendications précédentes, **caractérisé en ce qu'**il est configuré pour la réception d'un élément caractéristique du palpeur porté.

8. Ensemble de porte-palpeur avec au moins un porte-palpeur selon l'une quelconque des revendications précédentes et un support pour ce porte-palpeur, **caractérisé en ce que** le support possède une face de support prévue pour la pose dudit au moins un porte-palpeur, sur laquelle il est prévu des éléments de prise pour l'engagement avec les zones d'interaction des moyens de blocage du porte-palpeur pour garantir une position de blocage des faces d'appui en appui sur l'adaptateur de machine de mesure.

9. Procédé de fabrication d'un palpeur avec utilisation d'un porte-palpeur selon l'une quelconque des revendications de porte-palpeur précédentes, **caractérisé en ce que**
d'abord on dispose un adaptateur de machine de mesure dans le logement de l'adaptateur de machine de mesure, et
ensuite on exécute au moins une des étapes suivantes:
disposer le porte-palpeur sur un support,
marquer le porte-palpeur et/ou le support,
nettoyer l'adaptateur de machine de mesure se trouvant dans le logement, de préférence par nettoyage au jet de mousse CO₂,
de préférence avec apport préalable de colle dans l'adaptateur de machine de mesure,
disposer une tige dans l'adaptateur de machine de mesure,
de préférence une tige déjà munie d'une pointe de palpeur,
et/ou durcir les collages
inspection visuelle
et si nécessaire après l'enlèvement du porte-palpeur d'un support,
et l'étape supplémentaire
poser un capot pour le stockage et/ou le transport.
